# EUROPEAN PATENT SPECIFICATION

(11) **EP 2 111 267 B1**
(45) Date of publication and mention of the grant of the patent: **22.05.2019**
(21) Application number: 08705331.0
(22) Date of filing: 21.01.2008
(51) Int. Cl.: A62C 35/68, A62C 3/07, F16L 37/08, F16L 41/02, F16L 19/08

(54) **NOZZLE MEANS FOR EXTINGUISHER SYSTEM**
DÜSENMITTEL FÜR LÖSCHSYSTEM
MOYENS DE BUSE POUR SYSTÈME D'EXTINCTEUR

(30) Priority: 23.01.2007 SE 0700218
(43) Date of publication of application: 28.10.2009
(73) Proprietor: A. Svensson International AB, 352 35 Växjö (SE)
(72) Inventor: SAMUELSSON, Kennerth, S-352 36 Växjö (SE)
(74) Representative: AWA Sweden AB
(86) International application number: PCT/SE2008/050059
(87) International publication number: WO 2008/091209

(56) References cited:
- EP-A1- 1 321 170
- EP-A1- 1 321 170
- DE-A1-102005 027 718
- GB-A- 376 552
- US-A- 904 673
- US-A- 4 852 800
- US-A- 4 893 601
- US-A- 5 848 753
- US-B1- 6 186 121

## Description

### Field of the Invention

The invention relates to a nozzle means, which is adapted to be connected to an extinguisher system and which comprises a pipe coupling to be connected in the extinguisher system, said pipe coupling having a coupling piece, a coupling sleeve attached to the coupling piece, and a nozzle, which is attached to the coupling piece by the coupling sleeve.

### Background Art

A prior art nozzle means of this type has an externally threaded nozzle and a coupling sleeve with an internal thread matching the thread of the nozzle. Furthermore, the coupling piece of the pipe coupling has an external thread, to which the coupling sleeve also has a matching internal thread for fastening of the sleeve and the nozzle screwed into the same to the pipe coupling. This means that the pipe coupling must be specially manufactured in order to fit the coupling sleeve. Besides the coupling sleeve will be rather unwieldy due to the two different internal threads. Intermediate sealing rings will also be required for sealing, which necessitates many loose components that are to be assembled. EP 132 1 170A shows an extinguisher system comprising nozzle means. US 4 852 800A shows a nozzle means for Jet cutting.

### Summary of the Invention

The object of the invention is to provide an extinguisher system nozzle means which is easier to assemble, requires less space and allows use of standard type pipe couplings.

This object is achieved by a nozzle means according to claim 1, the nozzle of which is capable of spraying extinguishing liquid and formed in one piece with a sealing means having a frustoconical sealing member, which is pressed into the coupling piece by the coupling sleeve.

In a preferred embodiment, the coupling piece is externally threaded and the coupling sleeve is a union nut.

The sealing means preferably is a metal ring, such as a cutting ring or a clamping ring.

The coupling sleeve has an internal shoulder abutting against a lug of the sealing means.

### Brief Description of the Drawings

The invention will now be described in more detail by way of a preferred but not limiting embodiment and with reference to the accompanying drawings.
Fig. 1 is a schematic overall view and illustrates a plurality of nozzle means according to the invention arranged in an extinguisher system.
Fig. 2 is a perspective view of a nozzle means according to the invention.
Fig. 3 is a sectional view of the nozzle means shown in Fig. 2.
Fig. 4 is the same view as Fig. 3, the components of the nozzle means, however, being separated from each other.

### Description of a Preferred Embodiment

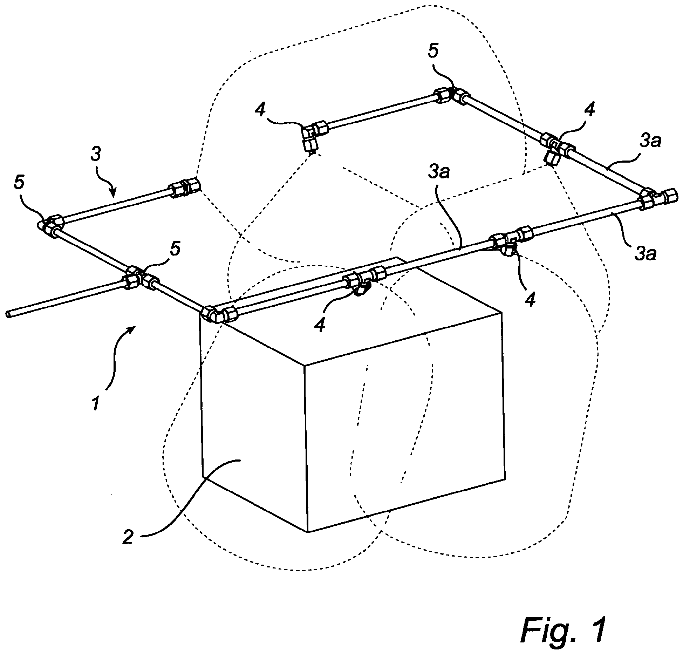

Fig 1 illustrates an extinguisher system 1 for an engine 2 (only schematically illustrated) in the engine compartment of a vehicle. On activation of the extinguisher system 1, that is in fire, extinguishing liquid in the form of atomised water mist is sprayed into the engine compartment to cool and extinguish the fire.

The system 1 comprises a container (not shown) for extinguishing liquid, which container is connected to a piping system 3 with nozzle means 4 according to the invention, which on activation of the extinguisher system are to spray the extinguishing liquid into the engine compartment.

Each nozzle means 4 comprises a pipe coupling 6 with an externally threaded coupling piece 6', a union nut 7 screwed onto the coupling piece 6', and a nozzle unit 8, which is attached to the coupling piece 6' by the union nut 7.

The union nut 7 could be replaced by a non-threaded coupling sleeve, which, for instance by a bayonet joint, is attached to a coupling piece adapted to the bayonet joint.

The nozzle unit 8 comprises a nozzle 8' and a sealing means 8". The sealing means 8" has a frustoconical sealing member 13, which is pressed into the coupling piece 6' by the union nut 7. The sealing means has the form of a cutting ring 8", but may be some other type of sealing metal ring, such as a clamping ring. The union nut 7 has an internal circumferential shoulder 11 abutting against a circumferential lug 12 of the cutting ring 8". Due to this design, no further seal is required, which results in simpler and less expensive assembly of the nozzle means 4.

The piping system 3 consists of pipe sections 3 which are connected to each other by the nozzle means 4 and pipe couplings 5 without nozzles.

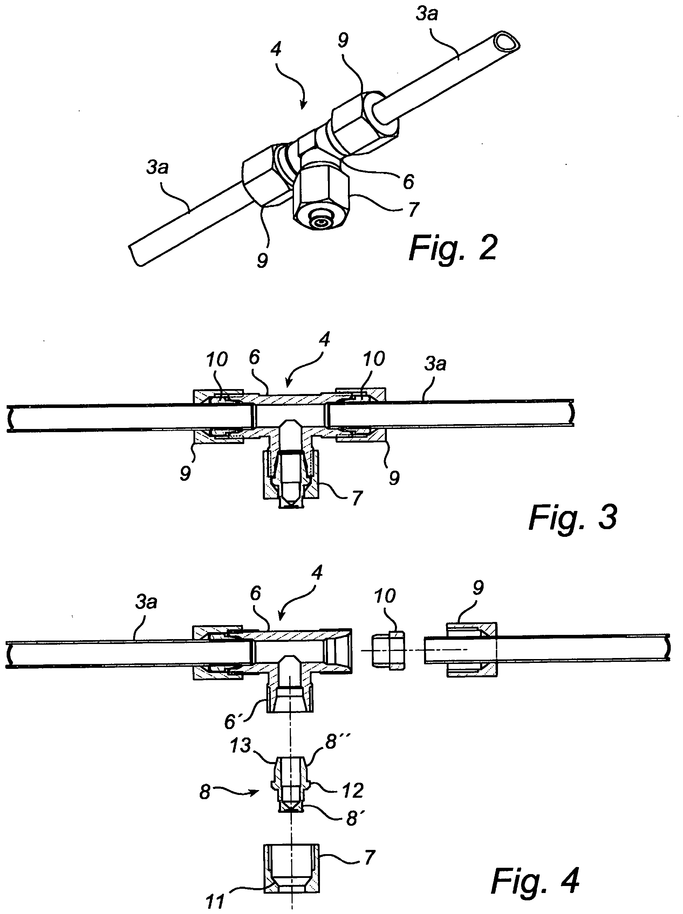

The pipe coupling 4 in Figs 2-4 is connected to two pipe sections 3a by union nuts 9 and cutting rings 10.

In Figs 2-4, the pipe coupling is a T-shaped pipe coupling, but it may also be an elbow pipe coupling or some other coupling that is suitable for the construction.

The sealing means 8", that is the cutting ring, is in prior art manner designed to be insertable into pipe couplings of various types, thus making it possible to use standard type pipe couplings. This means that the internal thread of the union nut 7 has to match only the outer thread of the connecting piece 6'.

The space of an engine compartment is frequently limited, and it is therefore important for the nozzle means 4 to be as small as possible. Since the nozzle unit 8 is not screwed into the union nut 7, this can be made smaller than a union nut for a nozzle according to prior art technique, where the union nut must have threads for both the nozzle and the connecting piece.

The fact that the nozzle unit is not screwed into the union nut also allows easier manufacture compared with a nozzle according to prior art technique since the operation of providing the unit with a thread is eliminated.

## Claims

1. An extinguisher system nozzle means (4), which is adapted to be connected to an extinguisher system (1) and which comprises
a pipe coupling (6) to be connected in the extinguisher system (1), said pipe coupling having a coupling piece (6'),
a coupling sleeve (7) attached to the coupling piece (6'), and
a nozzle (8'), which is attached to the coupling piece (6') by the coupling sleeve (7), wherein the nozzle (8') is capable of spraying extinguishing liquid and formed in one piece with a sealing means (8"), which has a frustoconical sealing member (13), which is pressed into the coupling piece (6') by the coupling sleeve (7), wherein the coupling sleeve (7) has an internal shoulder (11) abutting against a lug (12) of the sealing means (8").

2. A means as claimed in claim 1, in which the connecting piece (6') is externally threaded and the coupling sleeve (7) is a union nut.

3. A device as claimed in claim 1 or 2, in which the sealing means (8") is a metal ring.

4. A means as claimed in claim 3, in which the sealing means (8") is a cutting ring.

5. A means as claimed in claim 3, in which the sealing means (8") is a clamping ring.

## Patentansprüche

1. Löschsystemdüsenmittel (4), dazu geeignet, mit einem Löschsystem (1) verbunden zu werden, umfassend:
eine Rohrkupplung (6), die mit dem Löschsystem (1) verbunden werden soll, wobei die Rohrkupplung ein Kupplungsstück (6') aufweist,
eine Kupplungshülse (7), die an dem Kupplungsstück (6') angebracht ist, und
eine Düse (8'), die durch die Kupplungshülse (7) am Kupplungsstück (6') angebracht ist,
wobei die Düse (8') zum Sprühen von Löschflüssigkeit imstande ist und einstückig mit einem Abdichtungsmittel (8") ausgebildet ist, welches ein kegelstumpfförmiges Abdichtungsglied (13) aufweist, das durch die Kupplungshülse (7) in das Kupplungsstück (6') gepresst wird, wobei die Kupplungshülse (7) eine Innenschulter (11) aufweist, die an einen Ansatz (12) des Abdichtungsmittels (8") anstößt.

2. Mittel nach Anspruch 1, wobei das Verbindungsstück (6') mit Außengewinde versehen ist und die Kupplungshülse (7) eine Überwurfmutter ist.

3. Gerät nach einem der Ansprüche 1 oder 2, wobei das Abdichtungsmittel (8") ein Metallring ist.

4. Mittel nach Anspruch 3, wobei das Abdichtungsmittel (8") ein Schneidring ist.

5. Mittel nach Anspruch 3, wobei das Abdichtungsmittel (8") ein Klemmring ist.

## Revendications

1. Moyens de buse à système d'extincteur (4), qui est adapté pour être raccordé à un système d'extincteur (1) et qui comprend :
un accouplement de tuyau (6) destiné à être raccordé dans le système d'extincteur (1), ledit accouplement de tuyau comportant une pièce d'accouplement (6'),
un manchon d'accouplement (7) fixé à la pièce d'accouplement (6'), et
une buse (8') fixée à la pièce d'accouplement (6') par le manchon d'accouplement (7),
dans lequel la buse (8') est capable de pulvériser du liquide d'extinction et formée d'un seul tenant avec un moyen d'étanchéité (8") présentant un élément d'étanchéité frustoconique (13) étant pressé dans la pièce d'accouplement (6') par le manchon d'accouplement (7), le manchon d'accouplement (7) comportant une épaule interne (11) butant contre une languette (12) dudit moyen d'étanchéité (8").

2. Moyen selon la revendication 1, dans lequel la pièce de raccordement (6') est filetée extérieurement et le manchon d'accouplement (7) est un écrou d'assemblage.

3. Dispositif selon la revendication 1 ou 2, dans lequel le moyen d'étanchéité (8") est une bague métallique.

4. Moyen selon la revendication 3, dans lequel le moyen d'étanchéité (8") est une bague coupante.

5. Moyen selon la revendication 3, dans lequel le moyen d'étanchéité (8") est une bague de serrage.
